# EUROPÄISCHE PATENTANMELDUNG

(11) **EP 4 617 225 A1**
(43) Veröffentlichungstag der Anmeldung: **17.09.2025**
(21) Anmeldenummer: 25158561.8
(22) Anmeldetag: 18.02.2025
(51) Int. Cl.: B66F 9/12, B66F 9/18

(54) **VORRICHTUNG ZUM WENDEN VON ROLLBEHÄLTERN, VERWENDUNG UND VERFAHREN**

(30) Priorität: 12.03.2024 DE 102024107063
(71) Anmelder: Deutsche Post AG, 53113 Bonn (DE)
(72) Erfinder: Heintz, Thomas, 54579 Leudersdorf (DE)
(74) Vertreter: Michalski Hüttermann & Partner Patentanwälte mbB

(57) **Zusammenfassung**

Die Erfindung betrifft eine Vorrichtung (2) zum Wenden von Rollbehältern (200) und zur Befestigung an Gabelzinken (102) eines Flurfördergeräts (100), mit einem Befestigungsabschnitt (10) zur Befestigung an den Gabelzinken (102) und einem Drehabschnitt (20), der rotierbar an dem Befestigungsabschnitt (10) gelagert ist, wobei der Drehabschnitt (20) zwei Gabelelemente (22) zum Eingriff in einen Bodenabschnitt (202) eines Rollbehälters (200) aufweist, und wobei ein Abstand (26) zwischen den zwei Gabelelementen (22) und eine Länge (28) der zwei Gabelelemente (22) vorgesehen sind und die Länge (28) zumindest doppelt so groß wie der Abstand (26) ist, und/oder der Drehabschnitt (20) ein Beabstandungselement (34) zur Beabstandung der zwei Gabelelemente (22) gegenüber einem Untergrund (B) aufweist. Die Erfindung betrifft ferner ein Verfahren.

## Beschreibung

Die Erfindung betrifft eine Vorrichtung zum Wenden von Rollbehältern und ein Verfahren zum Wenden von Rollbehältern.

Rollbehälter sind rollbare Wagen, beispielsweise Transportwagen, Behälterwagen, Trolleys oder dergleichen. Rollbehälter können gestapelt werden. Besonders platzsparend können Rollbehälter gestapelt werden, wenn ein obenauf zu stapelnder Rollbehälter umgedreht bzw. gewendet wird, bevor er auf dem untenliegenden Rollbehälter abgelegt wird. Man spricht auch vom Drehstapeln. Problematisch ist es, wenn Rollbehälter zu schwer sind, um von Hand gewendet zu werden. Hierzu sind Vorrichtungen bekannt, beispielsweise Hubmechanismen, die einen Rollbehälter greifen, heben, drehen und ablassen können. Es herrscht Bedarf, die Vorrichtung bzw. das Verfahren zum Wenden zu verbessern.

Davon ausgehend ist es die Aufgabe der Erfindung, eine Vorrichtung bzw. ein Verfahren bereitzustellen, um die für das Wenden aufgebrachten Kosten zu senken und die Ergonomie zu steigern.

Diese Aufgabe wird durch den Gegenstand der unabhängigen Patentansprüche gelöst. Bevorzugte Weiterbildungen der Erfindung finden sich in den Unteransprüchen.

Gelöst wird die Aufgabe durch eine Vorrichtung zum Wenden von Rollbehältern und zur Befestigung an Gabelzinken eines Flurfördergeräts, insbesondere Gabelhochhubwagen, Stapler und/oder Gabelstapler. Die Vorrichtung weist vorschlagsgemäß einen Befestigungsabschnitt zur Befestigung an den Gabelzinken und einem Drehabschnitt, der drehbar bzw. rotierbar an dem Befestigungsabschnitt gelagert ist, auf, wobei der Drehabschnitt zwei Gabelelemente zum Eingriff in einen Bodenabschnitt eines Rollbehälters aufweist bzw. zum Aufgabeln des Bodenabschnitts.

Es kann vorgesehen sein, dass ein Abstand zwischen den zwei Gabelelementen und eine Länge der zwei Gabelelemente vorgesehen sind und die Länge zumindest doppelt so groß wie der Abstand ist. Alternativ oder ergänzend ist vorgesehen, dass der Drehabschnitt ein Beabstandungselement zur Beabstandung der zwei Gabelelemente gegenüber einem Untergrund bzw. Boden aufweist.

In anderen Worten, beispielsweise, wird ein Gerät vorgeschlagen, das sich am Hubwerkzeug von einem Stapler, Gabelstapler und/oder Hubwagen anbringen lässt und zum Wenden von Rollbehältern, beispielsweise Behälterwagen, vorgesehen bzw. ausgebildet ist. Das Gerät weist einen Abschnitt auf, um am Hubwerkzeug befestigt zu werden. Das Gerät weist einen weiteren Abschnitt mit einer Gabel bzw. wenigstens zwei Vorsprüngen auf, um damit in einen Rollbehälter einzugreifen. Die beiden Abschnitte sind drehbar/rotierbar aneinander befestigt, so dass man im Grunde eine drehbare Gabel für ein regelmäßig nicht drehbares Hubwerkzeug erhält. Die Erfindung zeichnet insbesondere aus, dass die die Gabel bildenden Vorsprünge möglichst eng aneinander liegen können, beispielsweise ist der Spalt zwischen den Vorsprüngen wenigstens halb so schmal wie er lang ist. Es ist auch möglich, dass der weitere Abschnitt einen Vorsprung aufweist, damit seine Gabel vom Boden beabstandet wird bzw. auf der richtigen Höhe für Rollbehälter auskommt.

Die Erfindung verwirklicht vorteilhaft den Gedanken einer möglichst platzsparenden Vorrichtung, die sich an in der Logistik typische Geräte mit Gabelzinken, klassischerweise Flurfördergeräte wie Stapler, Gabelstapler, Gabelhubwagen, etc., anbringen lässt und diese damit für das Wenden von Rollbehältern befähigt. Die Vorrichtung ist insoweit ein kostengünstig bereitstellbares, wenig wartungsaufwendiges und ergonomisches Hilfsmittel zum Wenden der Rollbehälter. Obwohl die Vorrichtung platzsparend ist, ist sie durch die Befestigung an den Gabelzinken sicher in ihrer Verwendung beim Wenden.

Flurfördergeräte bzw. Flurförderzeuge sind zu ebener Erde eingesetzte Fördermittel zum zumindest im Wesentlichen horizontalen Transport von Gütern. Die hier betrachteten Flurfördergeräte weisen Gabeln bzw. Gabelzinken auf. Ein Flurfördergerät ist insbesondere auf dem Untergrund fahrbar bzw. bewegbar. Es kann sich um einen Gabelhochhubwagen, Schubstapler, Mehrwegestapler, Schmalgangstapler, Gegengewichtsstapler, Horizontalkommissionierer, Vertikalkommissionierer, Gabelstapler, und/oder andere in der VDI-Richtlinie VDI 3586 vom September 2022 genannte Flurförderzeuge handeln. Das Flurfördergerät weist typischerweise zwei Gabelzinken auf, mit denen Güter oder Paletten aufgegabelt und angehoben werden können. Die Gabelzinken können wenigstens hoch und runter verstellt werden. Die Gabelzinken verlaufen regelmäßig zumindest im Wesentlichen parallel und beabstandet zueinander, um unter den oder in die Paletten eingeschoben werden zu können und die Paletten bzw. Waren entsprechend weit untergreifen und stabil anheben zu können.

Der Befestigungsabschnitt ist als ein Teil der Vorrichtung zu verstehen, der zur Befestigung an den Gabelzinken vorgesehen ist. Der Befestigungsabschnitt kann Metall, insbesondere Stahl und/oder Aluminium aufweisen oder daraus hergestellt sein. Der Befestigungsabschnitt kann eine Schweißkonstruktion sein, um robust zu sein. Der Befestigungsabschnitt kann ausgebildet sein, um - insbesondere unabhängig von Gabelzinken, und insbesondere zusammen mit dem Drehabschnitt - auf dem Untergrund abgestellt zu werden, beispielsweise um später von einem Flurfördergerät wieder einfach aufgenommen bzw. aufgegabelt werden zu können. Der Befestigungsabschnitt kann einen oder mehrere Füße zum Abstellen auf dem Untergrund aufweisen. Alternativ oder ergänzend kann das Beabstandungselement zum Abstellen auf dem Untergrund vorgesehen sein bzw. sich eignen. Der Befestigungsabschnitt kann ein Drehlager oder ein Teil eines Drehlagers aufweisen, um rotierbar mit dem Drehabschnitt verbunden zu sein.

Der Drehabschnitt ist als ein (weiterer) Teil der Vorrichtung zu verstehen, den man gegenüber dem Befestigungsabschnitt drehen kann. Der Drehabschnitt kann Metall, insbesondere Stahl und/oder Aluminium aufweisen oder daraus hergestellt sein. Der Drehabschnitt kann eine Schweißkonstruktion - insbesondere einschließlich Gabelelement(e), Träger und/oder Beabstandungselement(e) - sein, um robust zu sein. Der Drehabschnitt kann ausgebildet sein, um - insbesondere unabhängig von Gabelzinken, und insbesondere zusammen mit dem Befestigungsabschnitt - auf dem Untergrund abgestellt zu werden. Der Drehabschnitt kann einen oder mehrere Füße zum Abstellen auf dem Untergrund aufweisen. Alternativ oder ergänzend kann das Beabstandungselement zum Abstellen auf dem Untergrund vorgesehen sein bzw. sich eignen. Der Drehabschnitt kann ein/das Drehlager oder einen Teil eines/des Drehlagers aufweisen, um rotierbar mit dem Befestigungsabschnitt verbunden zu sein.

Der Drehabschnitt ist am Befestigungsabschnitt insbesondere rotierbar, drehbar bzw. schwenkbar festgelegt, insbesondere um eine/die Drehachse. Hierzu kann ein/das Drehlager vorgesehen sein. Das Drehlager kann eine in einer Buchse oder in mehreren Buchsen geführte Welle aufweisen. Das Drehlager kann ein Wälzlager oder mehrere davon aufweisen. Das Drehlager kann ein Gleitlager oder mehrere davon aufweisen, insbesondere Kunststoff-Gleitlager. Das Drehlager legt Drehabschnitt und Befestigungsabschnitt in Axialrichtung bzw. längs der Drehachse vorzugsweise aneinander fest. Vorzugsweise kann der Drehabschnitt um wenigstens eine volle Umdrehung hin und her rotiert werden. Weiter vorzugsweise kann der Drehabschnitt um wenigstens eine halbe Umdrehung hin und her rotiert werden. Insbesondere kann der Drehabschnitt um mehrere Umdrehungen hin und her rotiert werden. Es ist auch denkbar, dass der Drehabschnitt nur in eine Richtung rotierbar ist, wobei die andere Richtung gesperrt ist, optional wahlweise gesperrt ist. Es kann auch eine Arretiereinrichtung vorgesehen sein, die den Drehabschnitt gegenüber dem Befestigungsabschnitt wahlweise gegen Rotation sperrt, beispielsweise wenn ein Rollbehälter aufgegabelt und angehoben ist, damit dieser sich nicht versehentlich umdreht.

Der Abstand zwischen den zwei Gabelelementen ist quer bzw. senkrecht zu der Länge bzw. der Erstreckung der Gabelelemente zu verstehen. Die Länge ist vorzugsweise längs der Haupterstreckungsrichtung der Gabelelemente zu verstehen. Die Länge erstreckt sich vorzugsweise weg vom Befestigungsabschnitt und/oder längs einer/der Drehachse, um die der Drehabschnitt rotierbar ist. Letztlich sollen nach einer vorgeschlagenen Ausgestaltung der Erfindung die Gabelelemente deutlich näher aneinander sein, als sie sich in der Länge erstrecken, um einen stabilen Eingriff bzw. ein stabiles Aufgabeln zu erhalten.

Bei dem Beabstandungselement handelt es sich vorzugsweise um einen Abschnitt des Drehabschnitts, der daran befestigt oder daran angeformt ist. Das Beabstandungselement hat vorschlagsgemäß die Aufgabe, dass die Gabelelemente vom Untergrund fern gehalten werden bzw. in einer vorbestimmten / der richtigen Höhe gehalten werden, um einen Rollbehälter aufzugabeln. Das Beabstandungselement kann auch als Fuß verstanden werden. Das Beabstandungselement kann in seiner Länge verstellbar sein.

Der Rollbehälter weist bevorzugt einen Bodenabschnitt und wenigstens zwei gegenüberliegende Wandabschnitte auf. Die Wandabschnitte sind vorzugsweise zumindest im Wesentlichen parallel zueinander angeordnet. Die Wandabschnitte grenzen vorzugsweise an den Bodenabschnitt an bzw. sind daran festgelegt. Die Wandabschnitte gehen zumindest im Wesentlichen senkrecht vom Bodenabschnitt ab. Unterseitig, insbesondere festgelegt am Bodenabschnitt, können Rollen, beispielsweise schwenkbare bzw. mitlaufende Rollen, insbesondere vier Rollen, vorgesehen sein. Die Wandabschnitte und der Bodenabschnitt können U-förmig angeordnet sein. Insoweit können zwei die Rollbehälter gut drehgestapelt werden, weil die U-Formen ineinandergreifen können. Der Bodenabschnitt kann zur Gewichtsersparnis ein Gitter aufweisen und/oder Kunststoff aufweisen bzw. daraus hergestellt sein.

Ein Rollbehälter ist bevorzugt im Bereich des Bodenabschnitts bzw. am Bodenabschnitt mit einer oder mehreren, z.B. zwei, Eingriffsöffnungen versehen. Die Eingriffsöffnungen können nebeneinanderliegend angeordnet sein. Die Eingriffsöffnung(en) ist/sind für Gabelzinken oder Gabelelemente vorgesehen, also zum Eingriff bzw. Eintauchen dieser. Zwischen zwei Eingriffsöffnungen kann ein Zwischensteg angeordnet sein. Der Zwischensteg kann die Eingriffsöffnungen voneinander trennen und für Stabilität sorgen. Bevorzugt sind mehrere Eingriffsöffnungen bzw. Zwischenstege beidseitig bzw. fluchtend gegenüberliegend an dem Bodenabschnitt vorgesehen, damit ein Rollbehälter beidseitig aufgegabelt werden kann und/oder von beiden Seiten des Rollbehälters durch alle Eingriffsöffnungen gegabelt werden kann. Die Eingriffsöffnungen und/oder der Zwischensteg ist/sind bevorzugt von einem oder von mehreren Rahmenelementen am Bodenabschnitt des Rollbehälters oder von dem Bodenabschnitt selbst gebildet.

Vorteilhaft weitergebildet werden kann die Vorrichtung dadurch, dass die Länge (der zwei Gabelelemente) wenigstens 20 cm beträgt. Vorzugsweise beträgt die Länge wenigstens 40 cm, 50 cm oder 60 cm. Insbesondere beträgt die Länge 90 cm ± 20 cm. Die Länge beträgt vorzugsweise höchstens 150 cm oder 120 cm. Die zwei Gabelelemente sind vorzugsweise gleich lang und/oder im Querschnitt gleich ausgebildet. Die zwei Gabelelemente sind vorzugsweise lang genug, um den Bodenabschnitt des Rollbehälters an zwei Seiten zu überragen; typisch sind also Längen von wenigstens 60 cm oder wenigstens 80 cm, insbesondere wenigstens 10 % mehr als 60 cm bzw. 80 cm. Die zwei Gabelelemente sind vorzugsweise langgestreckt und/oder stabförmig. Bevorzugt sind die zwei Gabelelemente Metallteile und/oder Metallprofile, beispielsweise Rund- und/oder Mehrkantprofile, insbesondere Vierkantprofile. Insbesondere sind die zwei Gabelelemente zur Gewichtseinsparung hohl. Vorteilhaft sind die zwei Gabelelemente länger als der Rollbehälter, damit die Gabelelemente den Rollbehälter durchragen können. So kann ein guter Kompromiss aus Stabilität beim Halten eines Rollbehälters und auskragendem Gewicht der Vorrichtung geschaffen werden, wobei die Vorrichtung möglichst kompakt ist.

Alternativ oder ergänzend kann vorgesehen sein, dass der Abstand (zwischen den zwei Gabelelementen) höchstens 20 cm beträgt. Vorzugsweise beträgt der Abstand wenigstens 1 cm oder wenigstens 5 cm. Der Abstand kann vorteilhaft bei höchstens oder weniger als 15 cm oder 10 cm vorgesehen sein, insbesondere liegt der Abstand bei 7,5 cm ± 5 cm. Die zwei Gabelelemente verlaufen vorzugsweise zumindest im Wesentlichen parallel und/oder nebeneinander. Der Abstand liegt vorzugsweise an mehreren Stellen zwischen den zwei Gabelelementen vor. So kann ein guter Kompromiss aus Stabilität beim Halten eines Rollbehälters und auskragendem Gewicht der Vorrichtung geschaffen werden, wobei die Vorrichtung möglichst kompakt ist.

Es kann eine Breite der zwei Gabelelemente vorgesehen sein. Vorzugsweise sind die zwei Gabelelemente jeweils gleich breit. Die Breite entspricht insbesondere wenigstens der Hälfte von dem Abstand. Die Breite kann auch bis zu einem Vierfachen, einem Dreifachen oder einem Doppelten von dem Abstand entsprechen bzw. dies betragen, oder auch mehr. Insbesondere liegt die Breite im Bereich von wenigstens einer Hälfte bis zu einem Doppelten von dem Abstand liegen. Kompromiss aus Stabilität beim Halten eines Rollbehälters, Stabilität der Vorrichtung an sich, und auskragendem Gewicht der Vorrichtung geschaffen werden. Auch die Kompaktheit der Vorrichtung wird positiv beeinflusst.

Die zwei Gabelelemente können jeweils eine Abschrägung aufweisen und/oder einen Einlauf für einen Rollbehälter bilden. Die jeweilige Abschrägung kann stirnseitig am jeweiligen Gabelelement angeordnet sein. Die Abschrägungen beider Gabelelemente können einander zu gewandt sein. Die Abschrägungen können einen Einlauf für einen Rollbehälter, insbesondere einen Zwischensteg am Rollbehälter, bilden. Damit wird die Ergonomie vereinfacht und es kann schneller gewendet werden.

Es können zwei weitere Gabelelemente zum Eingriff in einen Bodenabschnitt eines Rollbehälters vorgesehen sein. Die zwei weiteren Gabelelemente können im Grunde wie die zwei Gabelelemente ausgebildet sein, d.h. beispielsweise mit Blick auf Abmaße und/oder beliebigen anderen bevorzugten Merkmalen ähnlich oder gleich ausgebildet sein. Die zwei weiteren Gabelelemente können in Bezug auf eine/die Drehachse des Drehabschnitts gegenüberliegend zu den zwei Gabelelementen angeordnet sein. Beispielsweise liegt ein/das Drehlager im Wesentlichen mittig zwischen den zwei Gabelelementen und den zwei weiteren Gabelelementen. Die zwei weiteren Gabelelemente und die zwei Gabelelemente sind vorzugsweise zumindest im Wesentlichen parallel zueinander angeordnet. Insbesondere sind zwei, drei oder alle der Gabelelemente zumindest im Wesentlichen parallel zueinander angeordnet. Die zwei weiteren Gabelelemente und die zwei Gabelelemente können miteinander eine U-Form des Drehabschnitts bereitstellen bzw. U-förmig angeordnet sein.

Die zwei Gabelelemente und optional die zwei weiteren Gabelelemente können beabstandet von einer/der Drehachse des Drehabschnitts angeordnet sein. Insbesondere sind die zwei Gabelelemente und optional die zwei weiteren Gabelelemente zumindest im Wesentlichen parallel zur Drehachse angeordnet bzw. orientiert. Der Abstand zur Drehachse beträgt beispielsweise wenigstens 10 cm, vorzugsweise wenigstens 15 cm. Die zwei Gabelelemente und optional die zwei weiteren Gabelelemente können exzentrisch bzw. außermittig um die Drehachse des Drehabschnitts bzw. mit dem Drehabschnitt rotieren. Das ist vorteilhaft vorgesehen, damit die Drehachse bei einem Eingriff der Gabelelemente in den Bodenabschnitt zum Schwerpunkt des Rollbehälters hin verlagert und/oder beabstandet von dem Bodenabschnitt angeordnet ist.

Die zwei Gabelelemente und die zwei weiteren Gabelelemente können zueinander einen weiteren Abstand aufweisen. Der weitere Abstand kann wenigstens 5 cm, bevorzugt wenigstens 10 cm betragen. Weiter bevorzugt beträgt der weitere Abstand wenigstens 15 cm und insbesondere 20 cm ± 10 cm oder 40 cm ± 20 cm. Der weitere Abstand kann geringer sein als die Länge, d.h. insbesondere die Länge der zwei (weiteren) Gabelelemente, beispielsweise um 25 % oder 50 % geringer als die Länge. Auch hier wird eine vorteilhafte Kompaktheit geschaffen, während die Funktionalität und Ergonomie gesteigert sind. Durch die zwei weiteren Gabelelemente kann ein schnelleres Wenden erreicht werden, weil der Drehabschnitt nach dem Wenden sofort wieder verwendet werden kann, ohne zurückgedreht zu werden. Außerdem wird so erreicht, dass Rollbehälter einfacher zu drehen sind, weil sie tendenziell um ihren Schwerpunkt oder zumindest nahe ihres Schwerpunkts gedreht werden können.

Der Drehabschnitt kann einen drehbar bzw. rotierbar am Befestigungsabschnitt gelagerten Träger aufweisen. An dem Träger können die zwei Gabelelemente und/oder die zwei weiteren Gabelelemente festgelegt sein, beispielsweise um die U-Form mit dem Träger bereitzustellen. Die Gabelelemente können an dem Träger verschweißt sein, um eine besonders stabile, verliersichere und damit sichere, und wartungsarme Konstruktion bereitzustellen. Der Träger erstreckt sich vorzugsweise quer, insbesondere im Wesentlichen senkrecht, zu einer Drehachse.

Der Drehabschnitt, insbesondere der Träger, kann zu dem Befestigungsabschnitt einen Abstand von mindestens 5 cm, vorzugsweise mindestens 10 cm, aufweisen. Der Abstand kann über ein/das Drehlager bereitgestellt werden. Der Abstand liegt insbesondere parallel zur Drehachse betrachtet vor. Der Abstand bewirkt vorteilhaft, dass die Gefahr, sich an drehbaren Teilen zu quetschen, reduziert wird.

Es kann sein, dass der Träger das Beabstandungselement, insbesondere zwei gegenüberliegende Beabstandungselemente, aufweist bzw. bereitstellt. Das Beabstandungselement wird bevorzugt dadurch bereitgestellt, dass die Gabelelemente längs des Trägers beabstandet vom freien Ende des Trägers am Träger festgelegt werden; insoweit verbleibt das Beabstandungselement als auskragender Abschnitt des Trägers. Beim Träger handelt es sich vorteilhaft um ein langgestrecktes und/oder stabförmiges Teil, beispielsweise ein Metallteil und/oder Metallprofil, beispielsweise Rund- und/oder Mehrkantprofil, insbesondere Vierkantprofil, aus dem sich insoweit synergetisch und auf konstruktiv einfache Weise ein stabiler Halter für die Gabelelemente und ggf. zusätzlich die Beabstandungselemente ergeben können. Insbesondere ist der Träger zur Gewichtseinsparung hohl. Vorzugsweise sind bei zwei Beabstandungselementen die Beabstandungselemente parallel zueinander und/oder voneinander weg weisend bzw. in andere/entgegengesetzte Richtungen zeigend ausgerichtet. So kann flexibel in zwei Drehstellungen der Vorrichtung gewendet werden und sich auf die Beabstandungselemente zum einfachen Höhenjustieren der Vorrichtung über dem Untergrund verlassen werden, und es muss nach einem ersten Wenden eines ersten Rollbehälters für den nächsten Rollbehälter die Vorrichtung nicht zurückgedreht werden.

Das Beabstandungselement kann eine Untergrundrolle aufweisen, wobei eine Untergrundrollenachse (d.h. eine Achse, um die die Untergrundrolle beim Rollen auf dem Untergrund) sich drehen kann) quer zu einer/der Drehachse des Drehabschnitts angeordnet sein kann. Bei der Untergrundrolle handelt es sich insbesondere um eine Schwerlastrolle. Es können auch mehrere Untergrundrollen bzw. Schwerlastrollen vorgesehen sein, beispielsweise wobei zwei solcher Rollen nebeneinander und/oder koaxial angeordnet sein können. Besonders vorteilhaft kann die Untergrundrolle in das Beabstandungselement integriert sein. Die Untergrundrolle kann mit einem Abschnitt aus dem Beabstandungselement vorstehen. Die Untergrundrollenachse bzw. Untergrundrollenachse kann zweiseitig im Träger gelagert sein. So mag ein hohler Träger, der das Beabstandungselement bereitstellt, mit wenig Aufwand auch die Untergrundrolle und/oder dessen Lagerung bereitstellen. Es kann auch sein, dass das Beabstandungselement selbst aus einem hohlen Teil gebildet ist, so dass auch dieses in einfacher Weise mit der Untergrundrolle ausgestattet sein kann.

Vorzugsweise sind bei zwei Beabstandungselementen mit jeweils einer, zwei oder mehr Untergrundrollen die Untergrundrollen voneinander weg weisend bzw. in andere/entgegengesetzte Richtungen zeigend ausgerichtet, insbesondere zumindest im Wesentlichen parallele Untergrundrollenachsen aufweisend. So kann flexibel in zwei Drehstellungen der Vorrichtung gewendet werden und sich an den Untergrundrollen zum widerstandsarmen Verschieben der Vorrichtung längs des Untergrunds verlassen werden, und es muss nach einem ersten Wenden eines ersten Rollbehälters für den nächsten Rollbehälter die Vorrichtung nicht unbedingt zurückgedreht werden.

Die Untergrundrolle kann verstellbar sein, insbesondere um die wirksame Länge des Beabstandungselements und/oder die Beabstandung der Gabelelemente vom Boden einzustellen. Beispielsweise kann das Beabstandungselement von der Drehachse weg oder zur Drehachse hin verstellt werden. Beispielsweise sind die Eingriffsöffnungen verschiedener Rollbehälter gegenüber dem Untergrund verschieden beabstandet. Hier kann eine Verstellbarkeit der Untergrundrolle und/oder des Beabstandungselements dafür sorgen, dass die Vorrichtung sich auch für die verschiedenen Rollbehälter eignet.

Der Befestigungsabschnitt kann einen Einschub für Gabelzinken aufweisen. Es können auch mehrere, bevorzugt zwei, Einschübe vorgesehen sein, die insbesondere nebeneinander und/oder zumindest im Wesentlichen parallel verlaufend angeordnet sind. Der Einschub ist vorzugsweise für eine der oder beide Gabelzinken vorgesehen oder ein Einschub ist jeweils für eine Gabelzinke vorgesehen, d.h. insbesondere passend dazu ausgestaltet, um einen Formschluss in wenigstens einer Richtung einzugehen. Anders gesagt kann pro Gabelzinke ein Einschub vorgesehen sein oder es kann ein Einschub für beide Gabelzinken vorgesehen sein. Der Einschub ist insbesondere als Aufnahme bzw. Aussparung zum Einstecken/Einschieben einer Gabelzinke oder mehreren davon zu verstehen. Der Einschub weist bevorzugt längs einer/der Drehachse des Drehabschnitts. Eine oder beide Gabelzinken können insoweit längs der Drehachse, insbesondere parallel dazu, in den Einschub oder in die Einschübe eingeschoben werden. Mit dem Einschub bzw. den Einschüben wird eine besonders nutzerfreundliche und fehlbedienungssichere Art zur Befestigung der Vorrichtung an einem Flurfördergerät wie einem Gabelhubwagen, Stapler und/oder Gabelstapler geschaffen. Ein Nutzer, der mit der Bedienung von Flurfördergeräten vertraut ist, erkennt unmittelbar, ob eine Gabelzinke richtig oder falsch an der Vorrichtung eingeschoben ist, wenn ein konkreter Einschub dafür vorhanden ist.

Der Befestigungsabschnitt kann ferner mit einer Befestigungseinrichtung versehen sein. Es können auch mehrere Befestigungseinrichtungen vorgesehen sein. Beispielsweise kann je Gabelzinke eine oder mehr als eine Befestigungseinrichtung vorgesehen sein. Es kann auch eine Befestigungseinrichtung oder es können mehrere davon vorgesehen sein, die für beide Gabelzinken vorgesehen sind. Die Befestigungseinrichtung kann den Befestigungsabschnitt lösbar an Gabelzinken befestigen. Beispielsweise weist die Befestigungseinrichtung einen Mechanismus zum reversiblen bzw. lösbaren Einklemmen von den Gabelzinken und/oder Eingehen eines insbesondere längs der Drehachse wirkenden Formschlusses mit Gabelzinken auf. Die Befestigungseinrichtung kann eine Schraube aufweisen, beispielsweise die zum lösbaren Einklemmen einer in einen Einschub eingeschobenen Gabelzinke ausgebildet sein. Die Befestigungseinrichtung bzw. Schraube kann beispielsweise quer zum Einschub, zur Drehachse und/oder zur Gabelzinke und auf den Einschub und/oder Gabelzinken weisend verstellbar bzw. verschraubbar sein. Die Befestigungseinrichtung ist insbesondere zum Bereitstellen eines lösbaren Kraftschlusses und/oder Formschlusses des Befestigungsabschnitts mit Gabelzinken ausgebildet. Mit besonderem Vorteil ist die Befestigungseinrichtung ausgebildet, um von einer Unterseite der Gabelzinken zumindest ein Klemmstück gegen eine Gabelzinke oder beide Gabelzinken lösbar zu verspannen. Beispielsweise kann das Klemmstück durch Verschrauben der Befestigungseinrichtung verstellt werden, insbesondere (bevorzugt von unten) gegen die Gabelzinke(n) verklemmt werden, um den Befestigungsabschnitt festzuklemmen. Das "unterseitige Verklemmen" hat den Vorteil, dass der befestigte Befestigungsabschnitt mit der Oberseite der Gabelzinke im Wesentlichen in einer Ebene verbleibt und die Vorrichtung insoweit einen gegenüber den Gabelzinken bei jeder Befestigung einen gleichen Winkel einnimmt. So können Rollbehälter möglichst problemlos aufgenommen werden und das Risiko, dass sich die Gabelelemente beim Einführen verkanten, wird verringert. Insoweit wird eine besonders sichere und dennoch leicht bedienbare Befestigung an Flurfördergeräten bereitgestellt. Auch wird die Position bzw. Neigung der Vorrichtung an den Gabelzinken damit bei jeder Befestigung gleich erreicht, so dass die Drehachse des Drehabschnitts immer möglichst gleich zum Untergrund bzw. zu den Gabelzinken orientiert ist. Das ist wichtig und vorteilhaft, damit die Gabelelemente in die Eingriffsöffnungen des Rollbehälters gut eingeführt werden können.

Ferner wird ein Verfahren zum Wenden Rollbehältern vorgeschlagen. Insbesondere wird bei dem Verfahren mittels eines Flurfördergeräts eine an Gabelzinken des Flurfördergeräts befestigte Vorrichtung (vorzugsweise die hier beschriebene Vorrichtung) in einen Bodenabschnitt eines Rollbehälters eingeschoben, wobei dabei die Vorrichtung wenigstens abschnittsweise bzw. zeitweise in Kontakt mit einem Untergrund ist und/oder auf dem/einem Untergrund rollt, wobei die Vorrichtung zusammen mit dem Rollbehälter angehoben wird, und wobei der Rollbehälter und vorzugsweise ein Drehabschnitt der Vorrichtung, insbesondere im Wesentlichen parallel zum Untergrund und/oder zu den Gabelzinken und/oder um eine/die Drehachse der Vorrichtung gedreht bzw. gewendet werden. Dabei wird der Rollbehälter insbesondere um ca. 180° gedreht bzw. gewendet. Der Rollbehälter kann danach in einen anderen Rollbehälter abgelegt werden. Danach kann die Vorrichtung aus dem Bodenabschnitt bzw. den Eingriffsöffnungen herausgezogen werden. Damit können dann Paare aus drehgestapelten Rollbehälter bereitgestellt werden. Es kann vorgesehen sein, zwei drehgestapelte Rollbehälter lösbar einander zu fixieren, beispielsweise mit Gurtmitteln bzw. langgestrecktem Befestigungsmittel. Insbesondere werden zwei benachbarte Wandabschnitte der drehgestapelten Rollbehälter aneinander fixiert.

Vorgeschlagen wird ferner eine Verwendung der Vorrichtung zum Wenden eines Rollbehälter. Der Rollbehälter kann wie vorliegend beschrieben ausgebildet sein. Der Rollbehälter weist insbesondere einen Bodenabschnitt, einen sich von dem Bodenabschnitt zumindest im Wesentlichen senkrecht erstreckenden Wandabschnitt oder zwei Wandabschnitte, die gegenüberliegend angeordnet sind, auf. Der Rollbehälter weist insbesondere wenigstens eine Eingriffsöffnung, insbesondere zwei Eingriffsöffnungen, am Bodenabschnitt auf. Ferner wird ein System mit der Vorrichtung und einem oder mehreren Rollbehälter und/oder einem Flugförderzeug vorgeschlagen.

Im Rahmen der Offenbarung steht die Abkürzung "bzw." für "beziehungsweise" und soll beispielsweise alternative, im Grunde gleichwertige und/oder synonyme Merkmale, Gedanken oder Begriffe angeben, um die Idee bzw. den Sinn einer Merkmals- oder Begriffsverwendung näher zu bringen. "Beziehungsweise" kann mit "und/oder" ersetzt werden.

Nachfolgend wird die Erfindung anhand eines bevorzugten Ausführungsbeispiels unter Bezugnahme auf die Zeichnungen weiter im Detail erläutert.

In den Zeichnungen zeigen
- Fig. 1: zwei drehgestapelte Rollbehälter, wobei der obere Rollbehälter umgedreht auf dem unteren Rollbehälter aufliegt, in einer perspektivischen Ansicht,
- Fig. 2A: eine Vorrichtung zur Befestigung an einem Flurfördergerät und zum Wenden von Rollbehältern, in einer perspektivischen Ansicht,
- Fig. 2B: die Vorrichtung der Fig. 2A, die an den Gabelzinken eines Flurfördergeräts befestigt ist und angehoben ist, in einer perspektivischen Ansicht,
- Fig. 3A-D: eine Vorrichtung zum Wenden von Rollbehältern, die an den Gabelzinken eines Flurfördergeräts befestigt ist, in perspektivischen Ansichten seitlich neben einem Rollbehälter (A), von oben auf die Vorrichtung (B), seitlich kurz vor dem Eintauchen in einen Bodenabschnitt des Rollbehälters (C), nach dem Eintauchen und nach dem Anheben des Rollbehälters (C) sowie nach dem Wenden des Rollbehälters (D),
- Fig. 4A-B: Details der Vorrichtung der Fig. 3A-D, und
- Fig. 5: eine Vorrichtung zum Wenden von Rollbehältern, die an den Gabelzinken eines Flurfördergeräts befestigt ist, und die Griffe und verkürzte Füße aufweist, in einer Seitenansicht.

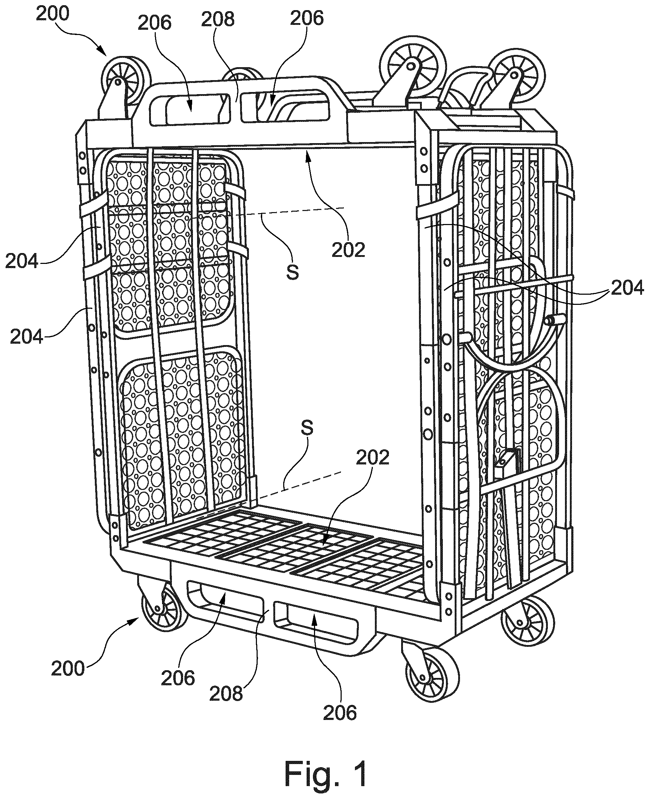

In Fig. 1 sind zwei drehgestapelte Rollbehälter 200 dargestellt, die insbesondere als Briefbehälterwagen bekannt sind bzw. als solche ausgebildet sind. Jeder der Rollbehälter 200 weist einen Bodenabschnitt 202 und zwei gegenüberliegende Wandabschnitte 204 auf. Die Wandabschnitte 204 grenzen an den Bodenabschnitt 202 an und gehen zumindest im Wesentlichen senkrecht von diesem ab. Wandabschnitte 204 und Bodenabschnitt 202 sind vorliegend U-förmig angeordnet. Insoweit können die Rollbehälter 200 gut drehgestapelt werden, weil die U-Formen ineinandergreifen können. Die beiden Rollbehälter 200 sind mit Gurtmitteln aneinander fixiert.

Ein jeweiliger Bodenabschnitt 202 weist vorliegend zwei nebeneinanderliegende Eingriffsöffnungen 206, beispielsweise für Gabelzinken oder Gabelelemente, auf. Die Eingriffsöffnungen sind insbesondere durch einen Zwischensteg 208 voneinander getrennt. Die Eingriffsöffnungen 206 bzw. der Zwischensteg 208 befinden sich vorliegend beidseitig bzw. fluchtend gegenüberliegend an dem Bodenabschnitt 202, damit ein Rollbehälter 200 beidseitig aufgegabelt werden kann. Die Eingriffsöffnungen 206 sind von einem oder von mehreren Rahmenelementen am Bodenabschnitt 202 des Rollbehälters 200 gebildet.

Die Rollbehälter 200 weisen jeweils eine Schwerpunktachse S auf, die sich oberhalb vom Bodenabschnitt 202 und im Wesentlichen mittig zwischen den Wandabschnitten 204 befindet. Die Schwerpunktachse S befindet sich regelmäßig unterhalb einer halben Höhe des Rollbehälters 200. Die Schwerpunktachse S verläuft durch den Massenmittelpunkt des Rollbehälters 200. Wenn der Rollbehälter 200 im Wesentlichen um die Schwerpunktachse S drehend gewendet wird, ist das Wenden wenig kraftaufwendig. Hier will die vorliegende Erfindung insbesondere in der nachstehend beschriebenen und in den anliegenden Figuren gezeigten Ausführungsform eine ergonomisch günstige Lösung schaffen.

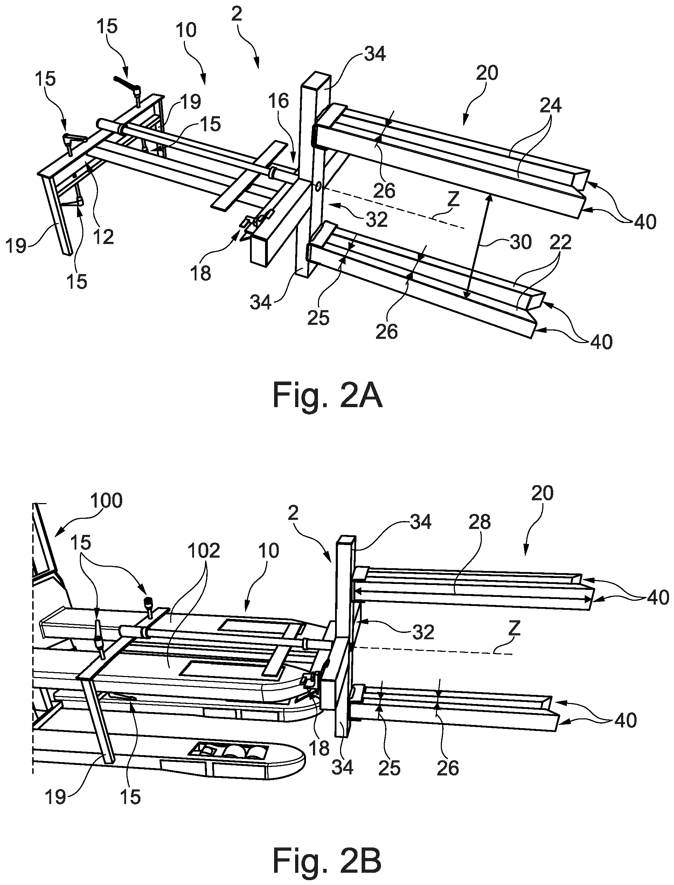

Fig. 2A-B zeigt eine Vorrichtung 2 zum Wenden eines Rollbehälters 200, insbesondere eines der Rollbehälter 200 aus Fig. 1, und zur Befestigung an Gabelzinken 102 eines Flurfördergeräts 100. In Fig. 2A ist die Vorrichtung 2 auf dem Untergrund B auf ihren Füßen 19 und auf einem Beabstandungselement 34 abgestellt. In Fig. 2B ist die Vorrichtung 2 an den Gabelzinken 102 des dort gezeigten Flurfördergeräts 100 befestigt und angehoben.

Die Vorrichtung 2 ist wenigstens abschnittsweise eine Schweißkonstruktion. Die Vorrichtung 2 ist zum Korrosionsschutz beschichtet und/oder lackiert. Die Vorrichtung 2 weist einen Befestigungsabschnitt 10 zur Befestigung an den Gabelzinken 102 und einen Drehabschnitt 20, der über ein Drehlager 16 um eine Drehachse Z rotierbar an dem Befestigungsabschnitt 10 gelagert ist, auf. Der Drehabschnitt 20 weist zwei Gabelelemente 22 zum Eingriff in einen Bodenabschnitt 202 eines Rollbehälters 200 auf.

Bei der Vorrichtung 2 ist es so, dass ein Abstand 26 zwischen den zwei Gabelelementen 22 und eine Länge 28 der zwei Gabelelemente 22 vorgesehen sind und die Länge 28 zumindest doppelt so groß wie der Abstand 26 ist. Vorliegend beträgt die Länge 28 ein Vielfaches von dem Abstand 26, insbesondere wenigstens ein Fünf- oder Zehnfaches. Die Länge 28 beträgt wenigstens 20 cm und der Abstand 26 höchstens 10 cm. Eine Breite 25 der zwei Gabelelemente 22 liegt im Bereich von wenigstens einer Hälfte bis zu einem Doppelten von dem Abstand 26.

Neben den zwei Gabelelementen 22 sind zwei weitere Gabelelemente 24 zum Eingriff in einen Bodenabschnitt 202 eines Rollbehälters 200 vorgesehen. Die zwei weiteren Gabelelemente 24 sind in Bezug auf Abmaße analog zu den zwei Gabelelementen 22 ausgebildet.

Die weiteren Gabelelemente 24 liegen in Bezug auf die Drehachse Z gegenüber zu den zwei Gabelelementen 22. Die Drehachse Z ist mittig dazwischen und verläuft zumindest im Wesentlichen parallel zu den Gabelelementen 22, 24. Die Gabelelemente 22 und die weiteren Gabelelemente 24 weisen zueinander einen weiteren Abstand 30 auf, der geringer ist als die Länge 28, und der wenigstens 20 cm beträgt. Die Gabelelemente 22 bzw. 24 sind also aus der Drehachse Z genommen, weil der Massenmittelpunkt bzw. die Schwerpunktachse S des Rollbehälters 200 sich im Wesentlichen dort befindet. So wird das Wenden erleichtert; ansonsten könnte man den Rollbehälter 200 nicht so leicht um eine horizontale Achse drehen. Die Gabelelemente 22, 24 sind jeweils Hohlprofile bzw. Vierkantprofile aus Metall, genauer gesagt Stahl.

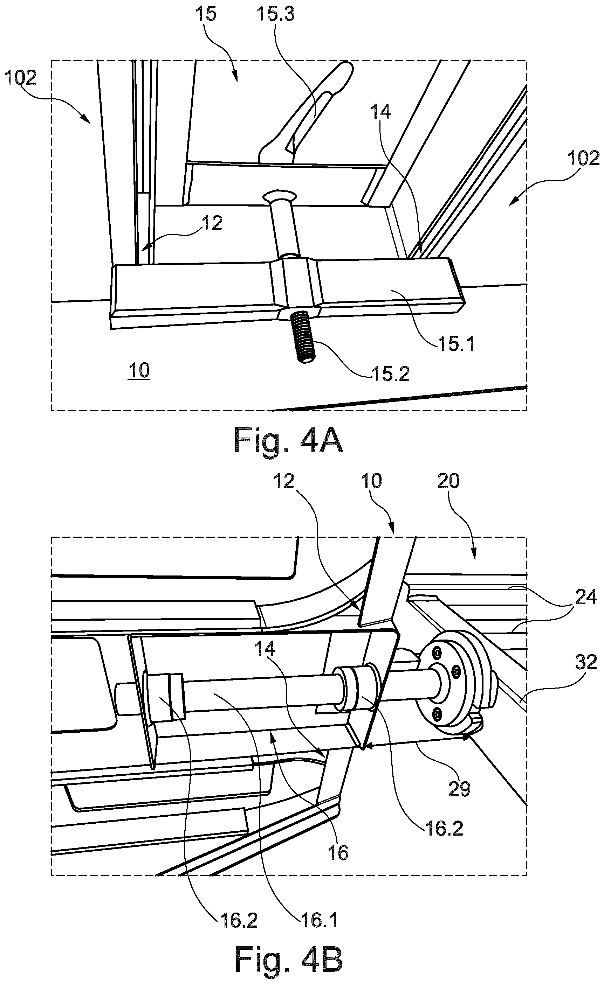

Der Drehabschnitt 20 weist einen Träger 32 auf, an dem die Gabelelemente 22 sowie 24 festgelegt bzw. verschweißt sind. Der Träger 32 bildet einen Teil des Drehlagers 16 und ist drehbar bzw. rotierbar am Befestigungsabschnitt 10 gelagert. Das Drehlager 16 weist eine in Buchsen 16.2 am Befestigungsabschnitt 10 geführte Welle 16.1 auf, vgl. auch Fig. 4B. Die Welle 16.1 ist drehfest am Drehabschnitt 20 bzw. am Träger 32 festgelegt und die Buchsen 16.2 sind am Befestigungsabschnitt 10 festgelegt. Bei dem Träger 32 handelt es sich wenigstens abschnittsweise um ein Hohlprofil bzw. Vierkantprofil mit oder aus Metall, insbesondere Stahl und/oder Aluminium.

Der Drehabschnitt 20 weist zwei der Beabstandungselemente 34 zur Beabstandung der zwei Gabelelemente 22 gegenüber einem Untergrund B auf. Vorliegend ist es so, dass der Träger 32 die Beabstandungselemente 34 als gegenüberliegende bzw. voneinander weg weisende bzw. entgegensetzte Richtungen zeigend Beabstandungselemente 34 aufweist bzw. ausformt. Der Befestigungsabschnitt 10 weist ferner die Füße 19 zum Abstellen auf. In Zusammenwirkung mit einem der Beabstandungselemente 34 kann die Vorrichtung 2 so auf dem Untergrund B abgestellt werden, vgl. Fig. 2A.

Die zwei Gabelelemente 22 weisen stirnseitig bzw. abseits vom Drehlager 16, vom Befestigungsabschnitt 10 und/oder vom Träger 32 jeweils eine Abschrägung 40 auf. Die zwei Abschrägungen 40 sind einander zu gewandt, insbesondere um einen sich verjüngenden Einlauf für den Zwischensteg 208 zu bilden. Vorliegend verlaufen die Abschrägungen 40 im Wesentlichen längs des Trägers 32 und/oder bilden in Verlängerung eine Schnittachse, die quer bzw. senkrecht zur Drehachse Z angeordnet ist. Vorliegend sind auch die zwei weiteren Gabelelemente 24 mit solchen Abschrägungen 40 versehen.

Der Befestigungsabschnitt 10 weist einen Einschub 12 für die Gabelzinken 102 auf, wobei der Einschub 12 längs der Drehachse Z weist. Die Vorrichtung 2, genauer gesagt der Befestigungsabschnitt 10 ist vorliegend mit Teilen einer Arretiereinrichtung 18 versehen, um den Drehabschnitt 20 wahlweise gegen Rotation am Befestigungsabschnitt 10 zu sperren. Alternativ oder ergänzend könnte der Drehabschnitt 20 eine/die Arretiereinrichtung 18 bzw. Teile davon aufweisen. Die Arretiereinrichtung 18 weist in Fig. 2 einen schwenkbaren, insbesondere federbeaufschlagten bzw. mit Federkraft beaufschlagten, Stift auf, der in wenigstens einer Drehstellung, vorliegend in zwei Drehstellungen, in den Drehabschnitt 20 greifen kann und so einen Formschluss um die Drehachse Z hervorrufen kann. Die Arretiereinrichtung 18 bzw. der Stift ist insbesondere quer zur Drehachse Z schwenkbar.

Die Arretiereinrichtung 18, insbesondere der Stift, kann handbetätigt aus dem Formschluss gebracht werden, um den Drehabschnitt 20 drehen zu können. Beispielsweise kann der schwenkbare Stift an seinem freien Ende heruntergedrückt werden, um am gegenüberliegenden Ende aus dem Formschluss hervorzutreten. Die Arretiereinrichtung 18 kann vorliegend, insbesondere wenn sie wieder losgelassen wird, durch die Federbeaufschlagung in einer entsprechenden Drehstellung wieder in den Formschluss gebracht werden.

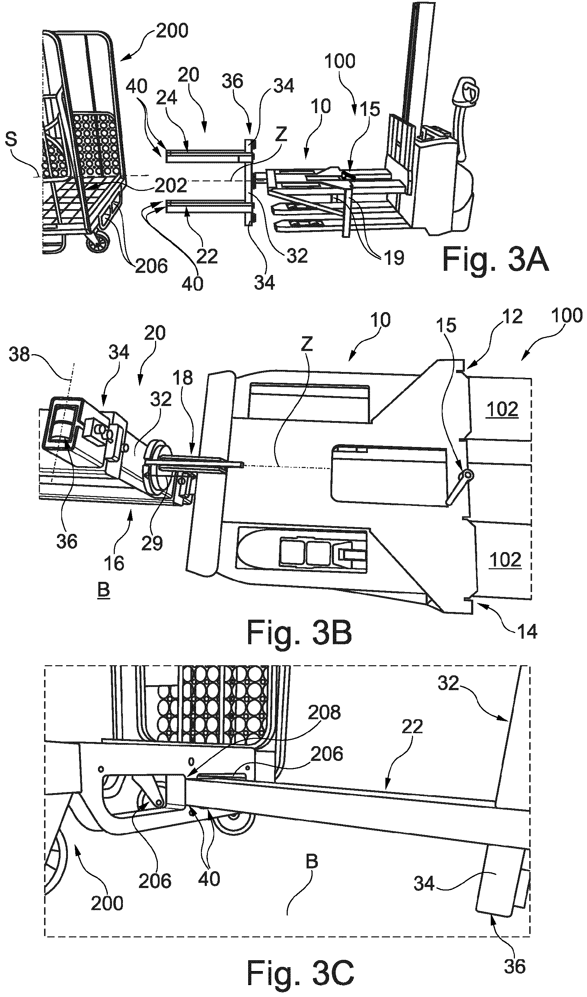

Der Befestigungsabschnitt 10 weist vorliegend eine Befestigungseinrichtung 15 auf, die auf die zwei Gabelzinken 102 einwirken kann und diese einklemmen kann. So kann eine lösbare Befestigung der Vorrichtung 2 an dem Flurfördergerät 100 hervorgerufen werden, wie in Fig. 2B oder auch Fig. 3B dargestellt ist.

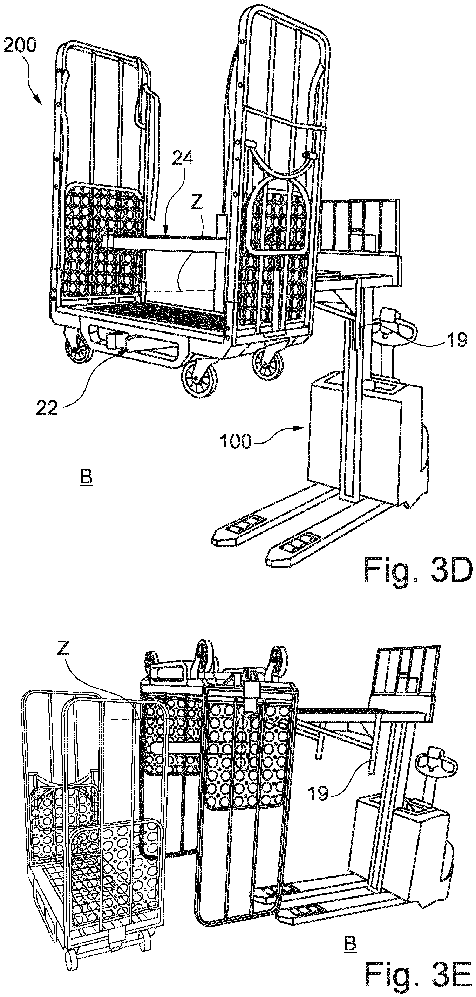

Die in Fig. 3 gezeigte Vorrichtung 2 ist im Grunde bzw. wenigstens teilweise wie die Vorrichtung der Fig. 2 ausgebildet. Insoweit gilt die Beschreibung zur Fig. 2 für die Fig. 3 entsprechend. Ergänzend dazu ist die Vorrichtung 2 der Fig. 3 mit einem Einschub 12 und einem daneben befindlichen Einschub 14, also zwei Einschüben 12 und 14 für jeweils eine Gabelzinke 102 ausgestattet. So wird auch eine verbesserte seitliche Führung an den Gabelzinken 102 hervorgerufen. Als weiterer Unterschied zwischen Fig. 2 und Fig. 3 ist zu erwähnen, dass in Fig. 2 der Träger 32 im Grunde X-förmig bzw. kreuzförmig ist, insbesondere wobei die Gabelelemente 22 und 24 gegenüberliegend am Träger 32 festgelegt sind, und insbesondere wobei Teile der Arretiereinrichtung 18 gegenüberliegend am Träger 32 festgelegt sind. In Fig. 3 ist der Träger 32 nicht X-förmig, sondern vielmehr nur I-förmig bzw. in nur einer Richtung langgestreckt. Die Arretiereinrichtung 18 ist in Fig 3. Kompakter als in Fig. 2 ausgebildet.

Mit Blick auf Fig. 3, insbesondere Fig. 3B, ist eine Variante gezeigt, bei der die Beabstandungselemente 34 jeweils zwei Untergrundrollen 36 aufweisen, die als Schwerlastrollen ausgebildet sind, wobei eine Untergrundrollenachse 38 quer zu der Drehachse Z angeordnet ist. Die Untergrundrollen 36 sind verstellbar, so dass die wirksame Länge des Beabstandungselements 34 bzw. der Abstand der Untergrundrollen 36 zur Drehachse Z veränderbar ist.

In Fig. 3A-E ist prinzipiell ein Verfahren zum Wenden eines Rollbehälters 200 schrittweise dargestellt bzw. angedeutet. Fig. 3A-E zeigt die Verwendung der Vorrichtung 2 zum Wenden eines Rollbehälters 200. Mittels eines Flurfördergeräts 100 wird die an den Gabelzinken 102 des Flurfördergeräts 100 befestigte Vorrichtung 2 mit zwei ihrer Gabelelemente 22 in den Bodenabschnitt 202 den Rollbehälters 200 eingeschoben, vgl. Übergang von Fig. 3A zu Fig. 3C, wobei die Vorrichtung 2 in Fig. 3C sich noch nur noch kurz vor dem Beginn des Einschiebens befindet. Jedes der zwei Gabelelemente 22 wird in eine der Eingriffsöffnungen 206 des Bodenabschnitts 202 eingeschoben, eintauchen bzw. diese aufgabeln. Dabei bewirken die zuvor erwähnten Abschrägungen 40, dass der Zwischensteg 208 zwischen den zwei Gabelelementen 22 zentriert wird, woraufhin der Rollbehälter 200 selbst ggf. seitlich verschoben und damit positionskorrigiert wird.

Bei und kurz vor dem Einschieben ist die Vorrichtung 2 wenigstens abschnittsweise in Kontakt mit dem Untergrund B bzw. rollt auf dem Untergrund B, vgl. Fig. 3C. Insbesondere weist bei dem Einschieben ein Träger 32 der Vorrichtung 2 im Wesentlichen senkrecht zum Untergrund B bzw. vertikal, vgl. Fig. 3B.

Wenn die Gabelelemente 22 vollständig eingeschoben sind, stehen die Gabelelemente 22 auf einer gegenüberliegenden Seite vom Rollbehälter 200 bzw. vom Bodenabschnitt 202 aus den gegenüberliegenden Eingriffsöffnungen 206 wieder hervor, vgl. Fig. 3D. Es ist insoweit bevorzugt, dass die Gabelelemente 22 bzw. 24 länger sind als der Bodenabschnitt 202, um den Bodenabschnitt 202 beidseitig zu überragen. Die Vorrichtung 2 wird dann außerdem zusammen mit dem Rollbehälter 200 angehoben, vgl. Fig. 3D.

Ersichtlich fallen die Drehachse Z und die Schwerpunktachse S zumindest im Wesentlichen zusammen, insbesondere weil die Gabelelemente 22 bzw. 24 entsprechend zum Schwerpunkt des Rollbehälters 200 außermittig zur Drehachse Z angeordnet sind, vgl. Fig. 3D. Insoweit wird das Drehen des Rollbehälters 200 ergonomisch erleichtert, weil die Unwucht gegenüber der Drehachse Z vergleichsweise klein ist.

Die Arretiereinrichtung 18 kann nach dem Anheben gelöst werden, damit der Drehabschnitt 20 relativ zum Befestigungsabschnitt 10 gedreht bzw. rotiert werden kann, um den Rollbehälter 200 zu wenden. Die Arretiereinrichtung 18 kann automatisch wieder einschnappen bzw. den Formschluss einnehmen, beispielsweise nach dem Drehen.

Der Rollbehälter 200 und der Drehabschnitt 20 der Vorrichtung 2 werden im Wesentlichen parallel zum Untergrund B und zu den Gabelzinken 102 und um die Drehachse Z der Vorrichtung 2 gedreht, vgl. den Übergang von Fig. 3D zu Fig. 3E. Im Anschluss kann der gewendete Rollbehälter 200 in den anderen in Fig. 3E gezeigten Rollbehälter 200 gestapelt werden. Schließlich kann so die Anordnung drehgestapelter Rollbehälter 200 erreicht werden, wie z.B. in Fig. 1 gezeigt ist.

Fig. 4A und Fig. 4B zeigen weitere Details der Vorrichtung aus Fig. 3A-E jeweils im Wesentlichen an der Unterseite des Befestigungsabschnitts 10.

Fig. 4A zeigt, wie die Befestigungseinrichtung 15 ein Einklemmen der in den Einschüben 12, 14 befindlichen Gabelzinken 102 realisiert. Ein Klemmstück 15.1 ist über eine Schraube 15.2 unterseitig an den Gabelzinken 102 verklemmt. Die Schraube 15.2 ist über ein Betätigungsmittel 15.3, beispielsweise ein Hebel, drehbar, um das Klemmstück 15.1 zu verstellen.

Fig. 4B zeigt, dass das Drehlager 16 eine Welle 16.1 aufweist, die in zwei längs der Welle 16.1 voneinander beabstandeten Buchsen 16.2. geführt ist. Die Buchsen 16.2 weisen jeweils ein Gleitlager auf, insbesondere ein Kunststoff-Gleitlager.

Der Abstand zwischen den Buchsen 16.2 ist insbesondere größer als der Abstand 29, um ein zu großes Biegemoment am Drehlager 16 zu vermeiden.

Ersichtlich steht Welle 16.1 vom Befestigungsabschnitt 10 um den Abstand 29 vor. Der Abstand 29 beträgt beispielsweise 10 cm ± 5 cm.

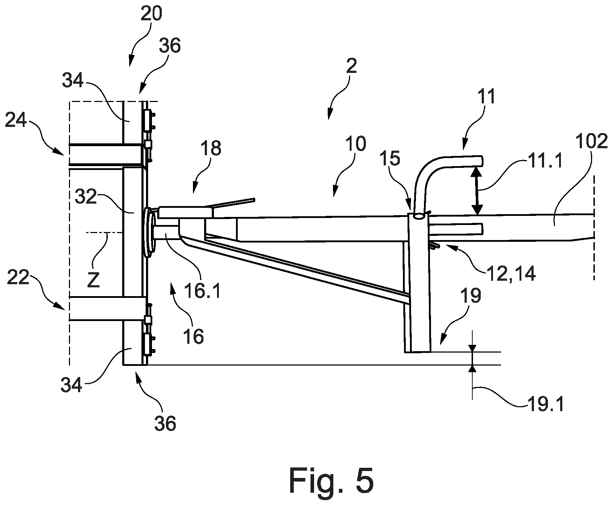

Fig. 5 zeigt eine Vorrichtung 2 zum Wenden von Rollbehältern. Die Vorrichtung 2 ist die an den Gabelzinken 102 eines Flurfördergeräts befestigt. Die Vorrichtung 2 basiert auf der in Fig. 3 und 4 gezeigten Vorrichtung 2, wobei die Beschreibung zu gleichen Bezugszeichen entsprechend gilt. Die Vorrichtung 2 ist vorliegend um zwei Griffe 11 ergänzt worden. Die Griffe 11 sind jeweils im Bereich oberhalb von einem der Einschübe 12, 14 angeordnet bzw. am Befestigungsabschnitt 10 festgelegt, insbesondere gegenüberliegend vom Drehabschnitt 20.

Die Griffe 11 weisen beispielsweise einen runden Querschnitt, vorzugsweise mit einem Durchmesser im Bereich zwischen 15 und 35 mm, insbesondere im Bereich zwischen 20 und 30 mm auf.

Die Griffe 11 sind vorliegend unterseitig von der Oberseite der Einschübe 12, 14 bzw. den Gabelzinken 102 vorzugsweise mit dem Abstand 11.1 im Bereich zwischen 200 und 350 mm, insbesondere zwischen 250 und 300 mm beabstandet. Die Griffe 11 können zum Arbeitsschutz mit einem Kunststoff versehen sein, beispielsweise einem Kunststoffüberzug.

Die Füße 19 der Vorrichtung 2 sind gegenüber den Beabstandungselementen 34 verkürzt, insbesondere damit die Vorrichtung 2 im Einsatz mit den Füßen 19 beabstandet vom Untergrund ist, wenn das Beabstandungselement 34 auf dem Untergrund aufsetzt und die Drehachse Z im Wesentlichen parallel zum Untergrund verläuft. Insoweit liegt zwischen den Beabstandungselementen 36 und den Füßen 19 bzw. zwischen den Füßen und dem Untergrund der Abstand 19.1 vor. Das ermöglicht auch, dass die Vorrichtung ähnlich wie eine Schubkarre schräg abgestellt werden kann und über die Griff 11 händisch aufgenommen werden kann und damit mit den Füßen 19 ausreichend vom Boden beabstandet ist.

Insbesondere wird mit verkürzten Füßen 19 erreicht, dass auch hängende bzw. schräge Gabelzinken 102, also solche, die aus konstruktiven Gründen oder aus Verschleiß- oder Altersgründen nicht mehr parallel zum Untergrund verlaufen, möglichst kollisionsfrei in die abgestellte Vorrichtung 2 einfahren können.

Der Abstand 19.1. beträgt vorzugsweise wenigstens 5 mm und höchstens 80 mm, weiter vorzugsweise wenigstens 15 mm und höchstens 60 mm, insbesondere beträgt der Abstand 19.1 40 mm ± 15 mm.

### Bezugszeichenliste

- 2: Vorrichtung
- 10: Befestigungsabschnitt
- 11: Griff
- 11.1: Abstand
- 12: Einschub
- 14: Einschub
- 15: Befestigungseinrichtung
- 15.1: Klemmstück
- 15.2: Schraube
- 15.3: Betätigungsmittel
- 16: Drehlager
- 16.1: Welle
- 16.2: Buchse
- 18: Arretiereinrichtung
- 19: Fuß
- 19.1: Abstand
- 20: Drehabschnitt
- 22: Gabelelement
- 24: weiteres Gabelelement
- 25: Breite
- 26: Abstand zwischen 22 bzw. zwischen 24
- 28: Länge von 22 bzw. von 24
- 30: weiterer Abstand zwischen 22 und 24
- 29: Abstand zwischen 10 und 20
- 32: Träger
- 34: Beabstandungselement
- 36: Untergrundrolle
- 38: Untergrundrollenachse
- 40: Abschrägung
- 100: Flurfördergerät
- 102: Gabelzinke
- 200: Rollbehälter
- 202: Bodenabschnitt
- 204: Wandabschnitt
- 206: Eingriffsöffnung
- 208: Zwischensteg
- B: Untergrund
- S: Schwerpunktachse
- Z: Drehachse

## Patentansprüche

1. Vorrichtung (2) zum Wenden von Rollbehältern (200) und zur Befestigung an Gabelzinken (102) eines Flurfördergeräts (100), mit einem Befestigungsabschnitt (10) zur Befestigung an den Gabelzinken (102) und einem Drehabschnitt (20), der rotierbar an dem Befestigungsabschnitt (10) gelagert ist,
wobei der Drehabschnitt (20) zwei Gabelelemente (22) zum Eingriff in einen Bodenabschnitt (202) eines Rollbehälters (200) aufweist, und
wobei ein Abstand (26) zwischen den zwei Gabelelementen (22) und eine Länge (28) der zwei Gabelelemente (22) vorgesehen sind und die Länge (28) zumindest doppelt so groß wie der Abstand (26) ist, und/oder der Drehabschnitt (20) ein Beabstandungselement (34) zur Beabstandung der zwei Gabelelemente (22) gegenüber einem Untergrund (B) aufweist.

2. Vorrichtung (2) nach Anspruch 1, wobei zwei weitere Gabelelemente (24) zum Eingriff in einen Bodenabschnitt (202) eines Rollbehälters (200) vorgesehen sind, die in Bezug auf eine Drehachse (Z) des Drehabschnitts (20) gegenüberliegend zu den zwei Gabelelementen (22) angeordnet sind.

3. Vorrichtung (2) nach einem der voranstehenden Ansprüche, wobei die zwei Gabelelemente (22) und optional die zwei weiteren Gabelelemente (24) beabstandet von einer/der Drehachse (Z) des Drehabschnitts (20) und zumindest im Wesentlichen parallel zur Drehachse (Z) angeordnet sind.

4. Vorrichtung (2) nach dem voranstehenden Anspruch, wobei die Länge (28) wenigstens 20 cm beträgt und/oder der Abstand (26) höchstens 10 cm beträgt.

5. Vorrichtung (2) nach einem der voranstehenden Ansprüche, wobei eine Breite (25) der zwei Gabelelemente (22) im Bereich von wenigstens einer Hälfte bis zu einem Doppelten von dem Abstand (26) liegt.

6. Vorrichtung (2) nach dem voranstehenden Anspruch, wobei die zwei Gabelelemente (22) und die zwei weiteren Gabelelemente (24) zueinander einen weiteren Abstand (30) aufweisen, der wenigstens 20 cm beträgt und/oder geringer ist als die Länge (28).

7. Vorrichtung (2) nach einem der voranstehenden Ansprüche, wobei der Drehabschnitt (20) einen rotierbar am Befestigungsabschnitt (10) gelagerten Träger (32) aufweist, wobei an dem Träger (32) die zwei Gabelelemente (22) und optional die zwei weiteren Gabelelemente (24) festgelegt sind.

8. Vorrichtung (2) nach einem der voranstehenden Ansprüche, wobei der Drehabschnitt (20), insbesondere der Träger (32) zu dem Befestigungsabschnitt (10) einen Abstand (29) von mindestens 5 cm, vorzugsweise mindestens 10 cm, aufweist.

9. Vorrichtung (2) nach dem voranstehenden Anspruch, wobei der (32) das Beabstandungselement (34), insbesondere zwei gegenüberliegende Beabstandungselemente (34), aufweist.

10. Vorrichtung (2) nach einem der voranstehenden Ansprüche, wobei das Beabstandungselement (34) eine Untergrundrolle (36) aufweist, vorzugsweise wobei eine Untergrundrollenachse (38) quer zu einer/der Drehachse (Z) des Drehabschnitts (20) angeordnet ist.

11. Vorrichtung (2) nach einem der voranstehenden Ansprüche, wobei der Befestigungsabschnitt (10) einen Einschub (12, 14) für die Gabelzinken (102) aufweist, vorzugsweise wobei der Einschub (12, 14) längs einer/der Drehachse (Z) des Drehabschnitts (20) weist.

12. Verwendung der Vorrichtung (2) nach einem der voranstehenden Ansprüche zum Wenden eines Rollbehälters (200), wobei der Rollbehälter (200) einen Bodenabschnitt (202), sich von dem Bodenabschnitt (202) zumindest im Wesentlichen senkrecht erstreckende Wandabschnitte (204), und wenigstens eine Eingriffsöffnung (206), insbesondere zwei Eingriffsöffnungen (206), am Bodenabschnitt (202) aufweist.

13. Verfahren zum Wenden eines Rollbehälters (200), wobei mittels eines Flurfördergeräts (100) eine an Gabelzinken (102) des Flurfördergeräts (100) befestigte Vorrichtung (2) in einen Bodenabschnitt (202) eines Rollbehälters (200) eingeschoben wird und dabei die Vorrichtung (2) wenigstens abschnittsweise in Kontakt mit einem Untergrund (B) ist und/oder auf dem/einem Untergrund (B) rollt, wobei die Vorrichtung (2) zusammen mit dem Rollbehälter (200) angehoben wird, und wobei der Rollbehälter (200) und ein Drehabschnitt (20) der Vorrichtung (2), insbesondere im Wesentlichen parallel zum Untergrund (B) und/oder zu den Gabelzinken (102) und/oder um eine Drehachse (Z) der Vorrichtung (2), gedreht werden, insbesondere wobei die Drehachse (Z) zum Schwerpunkt des Rollbehälters (200) hin verlagert und beabstandet von dem Bodenabschnitt (202) angeordnet ist und/oder mit einer Schwerpunktachse (S) des Rollbehälters (200) im Wesentlichen übereinstimmt, insbesondere wobei die Vorrichtung (2) nach einem der Ansprüche 1 bis 11 ausgebildet ist.
